# EUROPÄISCHE PATENTSCHRIFT

(11) **EP 1 956 222 B1**
(45) Veröffentlichungstag und Bekanntmachung des Hinweises auf die Patenterteilung: **27.05.2009**
(21) Anmeldenummer: 07002813.9
(22) Anmeldetag: 09.02.2007
(51) Int. Cl.: F02F 7/00, B23P 15/00, F01L 1/047, B21D 53/84

(54) **Verfahren zur Montage einer vormontierten Nockenwellenbaugruppe**
Method for mounting a preassembled camshaft assembly
Procédé de montage d'un bloc d'arbre à cames pré-assemblé

(43) Veröffentlichungstag der Anmeldung: 13.08.2008
(73) Patentinhaber: ThyssenKrupp Presta TecCenter AG, 9492 Eschen (LI)
(72) Erfinder: Schön, Helmut, Dr., 6820 Frastanz (AT)
(74) Vertreter: Wegmann, Urs

(56) Entgegenhaltungen:
- DE-A1- 3 603 938
- DE-A1- 10 041 975
- DE-A1- 19 504 636
- DE-B- 1 223 193
- DE-C1- 3 641 129
- DE-U1-9202006 018 35
- FR-A1- 2 815 092
- GB-A- 2 205 054
- US-A- 3 563 215
- US-A- 3 672 338
- US-A- 5 562 072
- US-A1- 2003 072 508

## Beschreibung

Die Erfindung betrifft ein Verfahren zur Montage einer vormontierten Nockenwellenbaugruppe entsprechend dem Oberbegriff des Anspruchs 1.

Unter einer Nockenwelle ist allgemein eine Welle mit mindestens einem Nocken zu verstehen, wobei der Nocken mit einem Nockenfolger in Kontakt steht. Durch eine Verdrehung der Welle wird der Nockenfolger nach dem in der Nockenkontur verankertem Ablauf bzw. "Programm" betätigt. So sind also unter dem Begriff Nockenwelle auch Verstellwellen für mechanische variable Ventiltriebe zu subsumieren. In diesem Fall sind die Nocken als Kurvenscheiben (beispielsweise als Exzenterscheiben) ausgebildet und entsprechend als Verstellscheiben auf der Welle angeordnet.

Zur Herstellung gebauter Nockenwellen werden Funktionselemente wie insbesondere Antriebsrad, Lager, Axiallagerscheibe, Sensorring, Pumpnocken, Nockenwellenversteller und Wellen einzeln hergestellt. Anschliessend werden die Funktionselemente auf der Welle, die als Trag- und Antriebswelle dient, positioniert und mittels eines geeigneten Fügeverfahrens auf der Welle befestigt. Im Stand der Technik sind eine Reihe von Verfahren zur Herstellung gebauter Nockenwellen bekannt.

Alternativ werden in Verbrennungskraftmaschinen auch nicht gebaute, beispielsweise gegossene oder geschmiedete Nockenwellen eingesetzt. Hierbei sind zumindest einige Funktionselemente, üblicherweise stets die Nocken, einteilig mit dem Wellenkörper ausgebildet.

Für die Lagerung einer Nockenwelle in Verbrennungskraftmaschinen, wie Hubkolbenmotoren, kommen heute im Wesentlichen zwei Konstruktionen zur Anwendung.

In dem einen Fall wird die Nockenwelle in ungeteilten Lagergehäusen oder Lagerböcken geführt, in welche fallweise geteilte oder ungeteilte Lagerschalen eingepresst sind. Bei oben liegender Nockenwelle ist das Lagergehäuse meist ein Nokkenwellenträger, der an den Zylinderkopf geschraubt wird. Bei unten liegender Nockenwelle ist das Lagergehäuse meist das Kurbelgehäuse.

In dem anderen Fall wird die Nockenwelle in geteilten Lagergehäusen geführt. Das Lagergehäuse besteht hier aus einem oberen Teil und einem unteren Teil, das als Lagerbock am Zylinderkopf verschraubt wird. In manchen Fällen werden die oberen Lagerbockteile mehrerer Lagerstellen zu einer Lagerbrücke zusammengefasst. Der untere Lagerbock ist meist am Zylinderkopf angegossen. Auch bei den geteilten Lagergeböcken werden fallweise geteilte Lagerschalen eingepresst.

Nachteilig bei dieser konstruktiven Ausführung der Nockenwellenlager ist, der erhebliche Aufwand bei der Fertigung der Lagerbohrung und bei der Montage der Nockenwelle und der sich hieraus ergebende Kostenaufwand. Der Aufwand ergibt sich insbesondere aus den hohen Anforderungen an die Begrenzung der Form- und Lagetoleranzen der gesamten Anordnung aus Nockenwelle, Lagerung und den betätigten Funktionselementen des Verbrennungsmotors, wie beispielsweise dessen Ventilbetätigungsglieder.

Zur Verbesserung des Standes der Technik wurden in der Vergangenheit bereits Lösungen vorgeschlagen, die Lagergehäuse bzw. Lagerböcke in die Nockenwelle zu integrieren. Beispielsweise in der DE 41 37 978 C1 ist die Verwendung von in die Nockenwellenkonstruktion integrierten, ungeteilten Lagergehäusen bei einer gebauten Nockenwelle erwähnt. In der DE 19504636 A1 wird eine Nockenwelle mit vormontierten, in die Nockenwellenkonstruktion integrierten, zweiteiligen Lagergehäusen vorgestellt.

Bei solchen, in die Nockenwellenkonstruktion integrierten Lagergehäusen ist es erforderlich, dass bei der Montage der Nockenwelle an ihrem Träger, z.B. dem Zylinderkopf oder dem Zylinder- oder Kurbelgehäuse alle Lagergehäuse der Nokkenwelle derart an ihrem Träger, befestigt werden, dass die Bohrungen der Lagergehäuse, die jeweils den einen Teil des Lagers bilden jeweils mit hinreichender Genauigkeit parallel sind, in einer Flucht liegen und lageorientiert sind.

Eine Vorrichtung zur Lösung dieser Aufgabe ist im bekannten Stand der Technik nicht dargestellt. Die Lagerflächen der Nockenwelle, die den anderen Teil des Nockenwellenlagers bilden, führen und positionieren also offensichtlich die Lagergehäuse bei der Montage an ihrem Träger.

Nachteilig ist, dass die Lagergehäuse innerhalb ihres Lagerspieles schief stehen oder / und radial versetzt stehen können. Kantenträger sowie ungünstige Verhältnisse bei der Lagerschmierung, erhöhte Reibung sind die Folge. Um ungünstigsten Fall kann die Lagerung fallweise durch erheblichen Verschleiß ausfallen.

Im Deutschen Gebrauchsmuster DE 20 2006 018 359 U1 wird eine Nockenwellenbaugruppe mit daran angeordneten Funktionsbauteilen mit Lagerböcken offenbart, wobei an jedem Lagerbock eine plane Anlagefläche ausgebildet ist zur Auflage und Befestigung des Lagerbockes an eine Auflagefläche eines Zylinderkopfes. Die Nockenwellenbaugruppe ist eine gebaute Anordnung, bei welcher die Welle als separates Einzelteil hergestellt ist und der Nocken und im Bedarfsfall weitere Funktionsbauteile, die als separate Einzelteile hergestellt sind, auf die Welle montiert sind und mindestens ein Lagerbock zwischen zwei Funktionsbauteilen auf der Welle angeordnet ist. Die Lagerböcke sind als ungeteilte Lagerböcke ausgebildet und die Anlageflächen der Lagerböcke sind derart verdrehbar auf der Welle angeordnet, dass alle Anlageflächen parallel zu einer Ebene ausrichtbar sind zur Ausrichtung an die korrespondierenden Anlageflächen am Zylinderkopf.

Der vorliegenden Erfindung liegt die Aufgabe zugrunde eine Vorrichtung zu schaffen, welche die Nachteile nach dem Stand der Technik vermeidet. Es ist insbesondere Aufgabe der Erfindung eine Nockenwellenbaugruppe mit darauf festgelegten Lagerungen bereit zu stellen, die einfach und präzise in den Zylinderkopf eines Verbrennungsmotores eingebaut werden kann.

Gelöst wird die Aufgabe durch eine Nockenwellenbaugruppe mit den Merkmalen des Anspruchs 1 und durch die Anwendung des Verfahrens nach Anspruch 12. In den Unteransprüchen sind vorteilhafte Weiterbildungen der Erfindung beschrieben.

Diese Aufgabe wird erfindungsgemäss dadurch gelöst, dass an den Lagergehäusen, die in die Nockenwellenkonstruktion integriert sind, jeweils eine Fläche mit hinreichender Genauigkeit erzeugt wird, zu der jeweils die das Lager bildende Bohrung am Lagergehäuse parallel liegt und an welcher bei der Montage alle Lagergehäuse jeweils ausgerichtet werden.

Die Nockenwellenbaugruppe für Verbrennungskraftmaschinen enthält eine Nokkenwelle und zumindest einen Nocken, und mindestens zwei Lagerböcken mit je einer Bohrung als Ausnehmung und als Lageraufnahme, in welcher ein Wellenabschnitt der Nockenwelle drehbar angeordnet ist , wobei an jedem Lagerbock eine erste plane Auflagefläche ausgebildet ist zur Auflage und Befestigung des Lagerbockes an einer Auflagefläche eines Zylinderkopfes oder an einer anderen Auflagefläche des Verbrennungskraftmaschine zur Montage und Befestigung am Zylinderkopf bzw. an der Verbrennungskraftmaschine, wobei mindestens zwei Lagerböcke mindestens eine weitere Fläche aufweisen, die plan ist und als Anlagefläche ausgebildet ist und diese Anlagefläche nicht in derselben Ebene liegt, wie die Auflagefläche, und dass die Anlagefläche im wesentlichen parallel zur Achse der Bohrung der Lageraufnahme ausgerichtet positioniert ist.

An der Nockenwelle können zusätzlich Funktionsbauteile angeordnet sein, wie beispielsweise Antriebsrad, Sensorring, oder Bauteile für andere Funktionen.

Bevorzugt weisen die Lagerböcke Befestigungshilfsmittel, beispielsweise Bohrungen auf, die im Zusammenwirken mit Befestigungsmitteln, beispielsweise Schrauben, eine Montage am Zylinderkopf oder einer anderen Stelle der Verbrennungskraftmaschine ermöglichen.

Eine derartige Nockenwellenbaugruppe kann in einfacher Weise für verschiedene Arten von Verbrennungskraftmaschinen eingesetzt werden. Im Falle der Anwendung für eine Verbrennungskraftmaschine mit unten liegender Nockenwelle kann die gesamte Nockenwellenbaugruppe an der entsprechenden Position neben dem Kurbelgehäuse einfach montiert werden. Auch ist es möglich, die Baugruppe in die Zylinderhaube (=Zylinderdeckel) zu montieren und anschliessend die gesamte Zylinderhaube mit der darin montierten Nockenwellenbaugruppe an die Verbrennungskraftmaschine zu montieren. Wenn in der weiteren Beschreibung von der Montage auf den Zylinderkopf gesprochen wird, so ist stets auch eine Anbringung an einer anderen Stelle, die sich aus den Gegebenheiten der jeweiligen Konstruktion der Verbrennungskraftmaschine als geeignet ergibt; mit umfasst.

Als Lagerböcke können hierbei geteilte oder ungeteilte Ausführungen eingesetzt werden. Unter einem ungeteilten Lagerbock ist ein Lagerbock zu verstehen, dessen Lageraufnahme über ihren gesamten Umfang ungeteilt ist. Bevorzugt ist jedoch der Einsatz eines einteiligen Lagerbockes. Ein geteilter Lagerbock liegt vor der Montage in zwei Teilen vor und es kann die Welle und allfällige Lagerteile vor dem Zusammenbau der Lagerböcke eingelegt werden. Bei ungeteilten Lagerbökken wird zur Montage die Welle mit den Lagern in die Lageraufnahme der Lagerböcke eingeschoben.

Ein wichtiger Vorteil der erfindungsgemässen Nockenwellenbaugruppe besteht darin, dass die Baugruppe einfach auf eine vorbereitete Anlagefläche an einer Lehre oder an einer am Zylinderkopf - oder entsprechend anderen Stelle der Verbrennungskraftmaschine - angeordneten Ausrichtungsfläche positioniert werden kann, vorzugsweise in einer Ebene parallel zur Nockenwellenachse. Diese Ebene fällt nicht zusammen mit der Auflagefläche am Zylinderkopf an welcher die Lagerböcke fest geschraubt werden. Diese Ebene ist mit Vorteil senkrecht zur Ebene der Auflagefläche ausgerichtet und die Anlageflächen am Lagerbock ist dann seitlich an diesem angeordnet. Nach der erfolgten Ausrichtung der Lagerböcke, also der gesamten Nockenwellenbaugruppe, werden die Lagerböcke am Zylinderkopf fixiert, beispielsweise durch festschrauben. Danach kann die allenfalls verwendete Lehre, beispielsweise eine Ausrichtungsplatte, entfernt werden.

Die Lagerung der Nockenwelle erfolgt in geteilten oder ungeteilten Lagern, die mit hoher Genauigkeit einzeln hergestellt werden können und auf entsprechend genau gefertigte Befestigungsabschnitte der Nockenwelle positioniert werden können. Die Lager können entweder direkt als Gleitlager, bei denen bevorzugt ein Wellenabschnitt der Tragwelle der Nockenwelle als ein Gleitpartner ausgebildet ist, oder auch als Wälzlager, bevorzugt als Nadellager, ausgebildet sein. Die Aussenschalen der Lager sind in Lagerböcken eingelassen oder mit den Lagerbökken einteilig ausgebildet. Bevorzugt weisen die Lagerböcke ihrerseits Befestigungshilfsmittel, oder Befestigungsabschnitte auf, mit denen die Lagerböcke und damit die gesamte Nockenwellenbaugruppe im Zylinderkopf an die korrespondierenden Befestigungsabschnitte befestigt wird. Die Befestigung erfolgt dabei durch Befestigungsmittel, am einfachsten durch Schrauben, die durch Ausnehmungen in den Lagerböcken, die als Befestigungshilfsmittel dienen, hindurchgeführt werden und in entsprechende Gewindebohrungen im Zylinderkopf eingeschraubt werden.

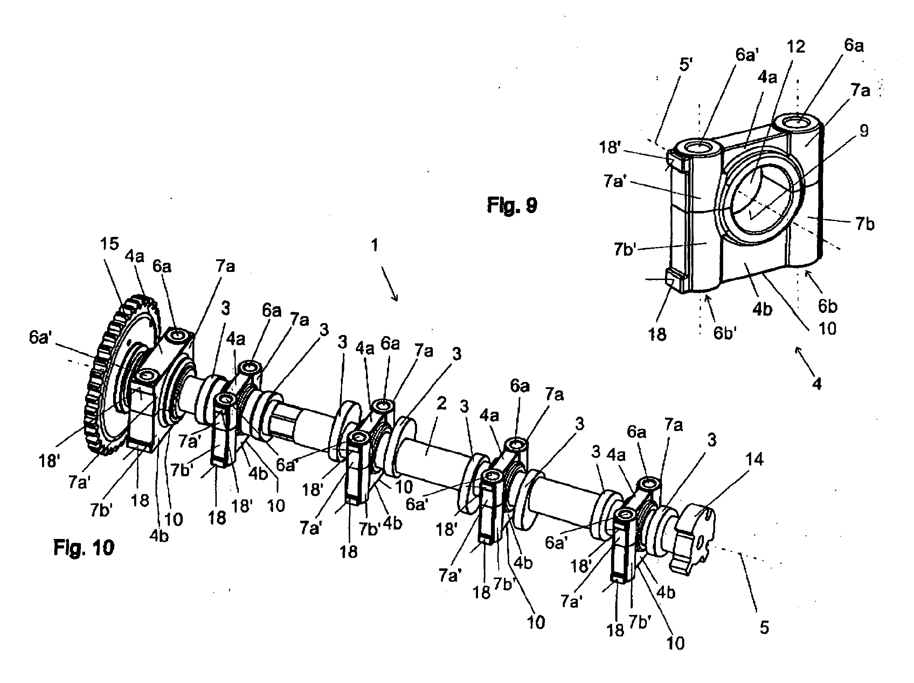

Die Erfindung wird nun nachfolgend beispielsweise und mit schematischen Figuren für bevorzugte Ausführungsformen näher erläutert. Es zeigen:
- Fig. 1: ein Lagerbock in ungeteilter Ausbildung zur Lagerung der Nockenwelle in dreidimensionaler Darstellung mit einer Anlagefläche gemäss der Erfindung;
- Fig. 2: ein Lagerbock gemäss Figur 1 mit einer Anlagefläche in Seitenansicht;
- Fig. 3: ein Lagerbock gemäss Figur 1 mit einer Anlagefläche in der Ansicht von unten;
- Fig. 4: ein Lagerbock gemäss Figur 1 mit einer Anlagefläche in der Ansicht in Wellenachsrichtung;
- Fig. 5: ein Lagerbock gemäss Figur 1 mit einer Anlagefläche in der Ansicht von oben;
- Fig. 6: eine Nockenwellenbaugruppe gemäss der Erfindung in Seitenansicht mit Anlageflächen an den aussen liegenden Lagerböcken;
- Fig. 7: eine Nockenwellenbaugruppe gemäss Figur 6 in der Ansicht von oben;
- Fig. 8: eine Nockenwellenbaugruppe gemäss der Erfindung in dreidimensionaler Ansicht mit ungeteilten Lagerböcken;
- Fig. 9: ein Lagerbock in geteilter Ausbildung zur Lagerung der Nockenwelle in dreidimensionaler Darstellung mit je einer Anlagefläche in den beiden Teilen des Lagerbocks gemäss der Erfindung;
- Fig. 10: eine Nockenwellenbaugruppe gemäss der Erfindung in dreidimensionaler Ansicht mit geteilten Lagerböcken;
Lagerböcke 4 können geteilt, also zweiteilig ausgebildet werden, wie dies in den Figuren 9 und 10 dargestellt ist. Dadurch können bei der Montage der Nockenwellenbaugruppe 1, in geöffnetem Zustand, Lagerteile in die Lageraufnahme 9 und die Welle 2 eingelegt werden. Eine derartige Ausführungsform ist auch bei der Verwendung einer nicht gebauten Nockenwelle anwendbar.

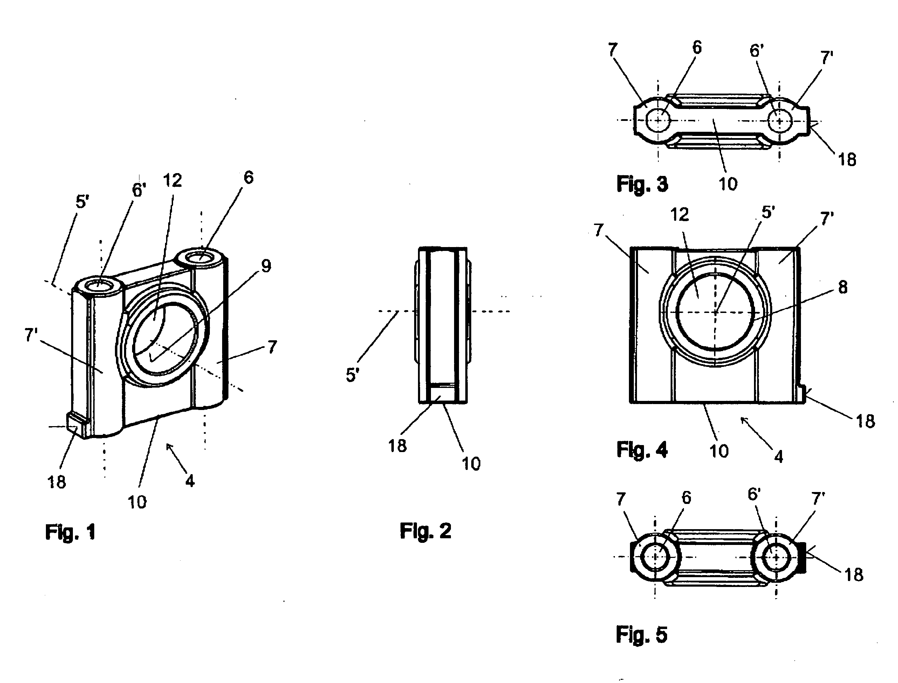

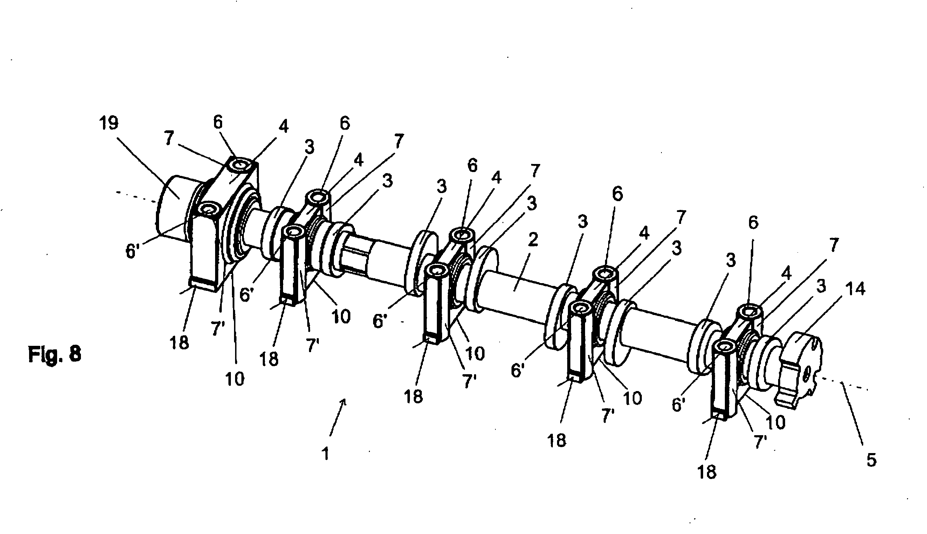

In den Figuren beziehen sich die Bezugszeichen mit dem Index a auf den oberen Teil und diejenigen mit dem Index b auf den unteren Teil der Lagerböcke 4a, 4b. Lagerböcke 4 können aber auch ungeteilt ausgebildet werden, wie dies in den Figuren 1 bis 5 und in Figur 8 dargestellt ist. In diesem Fall wird die Welle 2 vor der Montage durch die Lageraufnahme 9 mit den Lagern eingeschoben. Diese Ausführungsform kann nur bei einer gebauten Nockenwelle oder bei einer nicht gebauten Nockenwelle mit Lagern, deren Aussendurchmesser grösser ist, als der von den Nocken bei einer Drehung beschriebene Durchmesser ist, angewendet werden.

In beiden Fällen können die Lagerböcke sehr präzise einzeln hergestellt und anschliessend mit der Nockenwelle montiert werden.

Ein Lagerbock 4 weist eine Lagerbockausnehmung 12 auf, vorzugsweise als Bohrung (12) mit der Achse 5' ausgebildet, in welcher die Nockenwelle 2 mit ihrer Nockenwellenachse 5 drehbeweglich, auf einem Wellenabschnitt der Nockenwelle 2 gelagert wird, wie dies in den Figur 1 dargestellt ist. Die Welle kann als Hohlwellenrohr oder auch als Massivwelle ausgebildet sein. Die Lagerbockausnehmung 12 bildet eine Lageraufnahme 9 und kann an ihrer Wandung direkt als Lagerlauffläche ausgebildet sein und zusammen mit dem Wellenabschnitt eine Gleitlageranordnung 8 bilden. Die Lageraufnahme 9 nimmt in diesem Fall kein separates Lagerteil auf und dessen Wandung bildet dann selbst ein Lagerteil, beispielsweise dasjenige eines Gleitlagers. In diesem Fall ist mindestens der Wellenabschnitt geschliffen, um einen geeigneten Finish der Lagerflächen zu erzielen. Das Gleitlager 8 auf der Seite des Lagerbockes kann aber auch als separates Lagerteil 8, wie eine Büchse oder Schalenteile, ausgebildet sein und in die Bohrung 12 als Lageraufnahme 9 eingesetzt sein. Als Lager können auch rollende Lager, wie vorzugsweise Nadellager in die Lageraufnahme 9 eingesetzt werden.

Ein derartiger Lagerbock 4 wird, beispielsweise mit Schrauben (nicht dargestellt) am Zylinderkopf (nicht dargestellt) befestigt. Hierzu sind am Lagerbock 4 beidseitig Befestigungshilfsmittel wie vorzugsweise Befestigungsausnehmungen 6, 6', vorgesehen, wie dies in den Figuren 1 bis 10 dargestellt ist. Diese Ausnehmungen können Bohrungen sein direkt eingelassen in den Lagerbock 4 oder an seitlich zum Lagerbock ausgebildeten Befestigungsflansche. Die Bohrungen können direkt als Passsitz ausgeführt werden oder mit Vorteil genügend gross mit Spiel versehen sein oder als Langlöcher, derart dass zumindest in eine Richtung, vorzugsweise lateral zur Wellenachse 5, eine verschiebliche Positionierung möglich ist zur genauen lateralen Ausrichtung der ganzen Nockenwellenbaugruppe 1 bei der Montage am Zylinderkopf. Die Lagerböcke 4 weisen an ihrer Unterseite eine plane Auflagefläche 10 auf welche es ermöglicht diese exakt an einer am Zylinderkopf dafür vorgesehenen Auflagefläche positioniert zu montieren. Die Auflagefläche oder mindestens Abschnitte der Auflagefläche am Zylinderkopf liegen in einer Ebene und diese ist dafür präzisionsgearbeitet, um die Nockenwelle 2 genau in dieser Ebene ausrichten zu können. Derartige einteilige oder zweiteilige Lagerböcke 4 mit ihren Auflageflächen 10, den Lagerbockausnehmungen bzw. Bohrungen 12 mit den Lageraufnahmen 9 oder Lagerlaufflächen 9 und den Befestigungsmitteln 6, 6', 7, 7' können vorgefertigt werden und zu einer Nockenwellenbaugruppe 1 vormontiert werden, die dann als ganzes am Zylinderkopf befestigt wird. Die Nockenwellenbaugruppe 1 kann auch an einer anderen vorgebbaren Position an der Verbrennungskraftmaschine befestigt werden.

Alternativ ist es denkbar und möglich, die Nockenwellenbaugruppe durch Kleben oder auch durch eine andere Befestigungsmethode am Zylinderkopf - oder wie oben bereits ausgeführt, an einer anderen geeigneten Position an der Verbrennungskraftmaschine montiert werden.

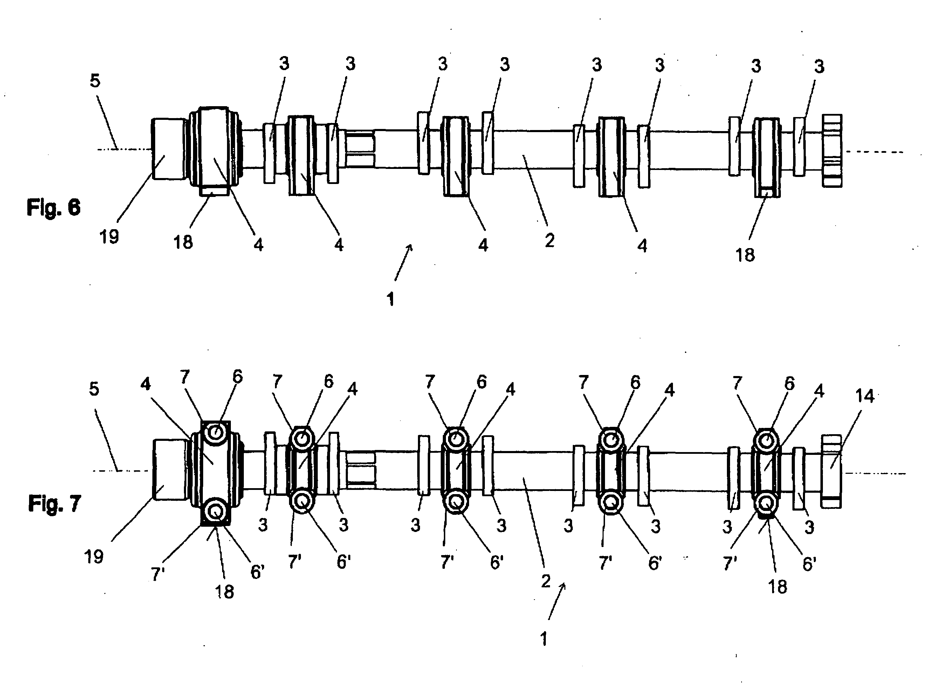

Eine Nockenwellenbaugruppe 1 ist aus einzelnen, vorgefertigten Teilen aufgebaut und zusammengefügt, wie dies aus den Figuren 6, 7, 8 und 10 ersichtlich ist. Die Nockenwellenbaugruppe 1 enthält eine Welle 2 mit mindestens zwei Lagerböcken 4 und einer an der Welle 2 angeordneten Nocken 3. Diese kann weitere Funktionsbauteile aufweisen, wie beispielsweise Antriebsmittel 19, beispielsweise ein Antriebsrad 15, Sensorring 14, Pumpennocken oder Bauteile für weitere Funktionen. Beim Zusammenbau der Nockenwellenbaugruppe 1 werden die Bauteile entsprechend der gewünschten Reihenfolge und späteren Position, bei ungeteilten Lagerblöcken 4, auf die Welle 2 geschoben und die zu fixierenden Teile, wie Nokken 3, daran befestigt. Hierbei ist mit Vorteil mindestens ein Lagerbock 4 zwischen zwei Funktionsbauteilen 3, 14, 15, angeordnet welche mit der Welle 2 drehfest verbunden sind. Beispielsweise ist ein Antriebsrad 15 an dem einen Wellenende drehfest an der Welle 2 angeordnet. Daran anschliessend folgt ein Lagerbock 4, der die Welle drehbeweglich aufnimmt und nach dem Lagerbock 4 ein an der Welle 2 befestigter Sensorring 14 oder ein Nocken 3 oder ein anderes Funktionsbauteil wie dies in den Figuren 6 bis 8 dargestellt ist. In den Figuren ist auch gezeigt, wie ein Lagerbock 4 zwischen je einem Nocken 3 angeordnet ist. Bei geteilten Lagerböcken 4 können diese auch nachträglich in der gewünschten Reihenfolge zwischen den Bauteilen angeordnet werden.

An mindestens zwei Lagerböcken 4 werden, gemäss vorliegender Erfindung, neben der ersten planen Auflagefläche 10 mindestens je eine weitere Fläche, die als, vorzugsweise plane, Anlagefläche 18 ausgebildet ist, vorgesehen. Diese weitere Anlagefläche 18 liegt nicht in derselben Ebene, wie die Auflagefläche 10. Diese Anlagefläche 18 ist im wesentlichen parallel, entsprechend der geforderten Genauigkeit, zur Längsachse der Bohrung 12 bzw. der Ausnehmung 12 der Lageraufnahme 9 ausgerichtet. Vorzugsweise ist diese Ausrichtung ebenfalls parallel zur Längsachse 5 der Nockenwellen 2. Diese Anlagefläche 18, welche mit hinreichender Genauigkeit erzeugt wird, liegt somit zu der jeweils die das Lager bildende Bohrung 12 am Lagerbock 4 parallel.

Die Anlagefläche 18 kann sowohl an einem geteilten, wie auch an einem ungeteilten Lagerbock angeordnet sein. Vorzugsweise sind die Anlageflächen 18 an allen Lagerböcken 4 am gleichen Ort angebracht, jedenfalls derart, dass diese vorzugsweise bei paralleler Ausrichtung zur Längsachse 5 alle in der gleichen Ebene liegen. Die Anlageflächen 18 sind mit Vorteil in einer senkrechten Ebene zur Ebene der ersten Auflagefläche 10 ausgerichtet und liegen mit Vorteil in derselben Ebene. Es ist vorteilhaft, wenn alle Anlageflächen 18 der mindestens zwei Lagerböcke 4 mit gleichem Abstand zur Mitte der Ausnehmungen der Lageraufnahmen 9 und somit zur Längsachse 5 der Nockenwelle 2 und in gleicher Ebene liegend ausgerichtet, angeordnet sind.

Neben Lagerböcken 4 mit derartigen Anlageflächen 18 können innerhalb einer Nockenwellenbaugruppe 1 auch Lagerböcke 4 angeordnet werden, die keine Anlageflächen 18 aufweisen. Es ist von Vorteil wenn jeweils in je einem Endbereich der Welle 2 je ein Lagerbock 4 mit Anlageflächen 18 angeordnet werden und dazwischen mindestens ein Lagerbock 4 ohne Anlagefläche 18, wie dies in Figur 6 und 7 dargestellt ist.

Mit Hilfe dieser Anlageflächen 18 an den Lagerböcken (4) kann nun die Nockenwellenbaugruppe 1 vor der Montage am Zylinderkopf an eine IlMontagefläche anliegend positioniert ausgerichtet werden. Dadurch ist es möglich zusätzlich, neben der Ebene der Auflagefläche am Zylinderkopf, in einer weiteren zweiten Ebene eine präzise Ausrichtung der ganzen Baugruppe parallel zur Längsachse 5 der Nockenwelle 2 vorzunehmen. Hiermit ist eine präzise Ausrichtung der ganzen Nockenwellenbaugruppe 1 bei der Montage in vorgegebener Richtung der Längsachse möglich ohne Gefahr einer Verschiebung bei der Montage. Die Montagefläche kann als Lehre ausgebildet werden, beispielsweise als plane Platte, an dessen Fläche die Anlageflächen 18 ausgerichtet werden. Diese Lehre kann fest angeordnet sein oder als separates entfernbares Teil. Nach dem fixieren der Nokkenwellenbaugruppe 1 am Zylinderkopf, beispielsweise durch verschrauben, kann die Lehre entfernt werden. Die Nockenwellenbaugruppe liegt somit mit den Auflageflächen 10 der Lagerböcke 4 an der korrespondierenden Fläche am Zylinderkopf an und ist somit auch lateral zur Wellenachse 5 genau ausgerichtet. Anstelle einer Lehre als Ausrichtungsfläche kann eine derartige Fläche auch zusätzlich direkt am Zylinderkopf vorgesehen werden. Weiterhin ist es möglich an einer Seite eines Lagerbockes 4 zwei kleinere Anlageflächen 18, 18' anzuordnen, die wiederum mit der Ebene fluchten und dadurch ein Verkippen der Anordnung an der Ausrichtungsfläche verhindert, wie dies in Figur 10 dargestellt ist. Anstelle von zwei kleineren Anlageflächen 18, 18' kann auch eine einzelne, grössere Fläche am Lagerbock 4 ausgebildet werden.

Durch das Vorgehen, gemäss der Erfindung, ist eine Vormontage einer Nockenwellenbaugruppe 1 möglich, welche danach als ganzes präzise und wirtschaftlich an einem Zylinderkopf montiert werden kann.

## Patentansprüche

1. Verfahren zur Montage einer vormontierten Nockenwellenbaugruppe (1) für Verbrennungskraftmaschinen enthaltend eine Nockenwelle (2) mit einer Längsachse (5) und zumindest einen Nocken (3), und mindestens zwei Lagerböcken (4) mit je einer Bohrung (12) als Ausnehmung mit einer Lageraufnahme (9), in welcher ein Wellenabschnitt der Nockenwelle (2) drehbar angeordnet ist , wobei an jedem Lagerbock (4) eine erste plane Auflagefläche (10) ausgebildet ist zur Auflage und Befestigung des Lagerbockes (4) an einer Auflagefläche eines Zylinderkopfes oder einer anderen vorgebbaren Position an der Verbrennungskraftmaschine und dass mindestens zwei Lagerböcke (4) mindestens eine weitere Fläche aufweisen, die plan ist und als Anlagefläche (18) ausgebildet ist, wobei diese Anlagefläche (18) nicht in derselben Ebene liegt, wie die Auflagefläche (10), und dass die Anlagefläche (18) im wesentlichen parallel zur Achse (5') der Bohrung (12) der Lageraufnahme (9) ausgerichtet positioniert ist **dadurch gekennzeichnet, dass** die Anlageflächen (18) der Lagerböcke (4) der Nockenwellenbaugruppe (1) vor ihrer Befestigung am Zylinderkopf an der Fläche eines Werkzeuges, das als Lehre dient ausgerichtet werden.

2. Verfahren nach Anspruch1 **dadurch gekennzeichnet, dass** mindestens ein Lagerbock (4) zwischen zwei Funktionsbauteilen (3, 14, 15) auf der Nockenwelle (2) angeordnet wird.

3. Verfahren nach einem der Ansprüche 1 oder 2, **dadurch gekennzeichnet, dass** die Anlageflächen (18) im wesentlichen parallel zur Längsachse (5) der Nockenwelle (2) ausgerichtet werden.

4. Verfahren nach einem der vorhergehenden Ansprüche, **dadurch gekennzeichnet, dass** alle Anlageflächen (18) der mindestens zwei Lagerböcke (4) mit gleichem Abstand zur Mitte der Ausnehmungen der Lageraufnahmen (9) und somit zur Längsachse (5) und in gleicher Ebene liegend ausgerichtet, angeordnet werden.

## Claims

1. Method for assembling a pre-mounted camshaft assembly (1) for a combustion engine containing a camshaft (2) with a longitudinal axis (5) and at least one cam (3), and at least two bearing blocks (4) each with a bore (12) as a recess with a bearing holder (9) in which is rotatably arranged a shaft section of the camshaft (2), wherein at each bearing block (4) is formed a first flat support surface (10) for support and attachment of the bearing block (4) at a support surface of a cylinder head or at another pre-specifiable position on the combustion engine, and that at least two bearing blocks (4) have at least one further surface which is planar and formed as a contact surface (18), wherein this contact surface (18) does not lie in the same plane as the support surface (10), and that the contact surface (18) is positioned aligned substantially parallel to the axis (5') of the bore (12) of the bearing holder (9), **characterised in that** the contact surfaces (18) of the bearing blocks (4) of the camshaft assembly (1), before their attachment to the cylinder head, are aligned to the surface of a tool which serves as a jig.

2. Method according to claim 1, **characterised in that** at least one bearing block (4) is arranged between two function components (3, 14, 15) on the camshaft (2).

3. Method according to one of claims 1 or 2, **characterised in that** the contact surfaces (18) are aligned substantially parallel to the longitudinal axis (5) of the camshaft (2).

4. Method according to any of the preceding claims, **characterised in that** all contact surfaces (18) of the at least two bearing blocks (4) are arranged with the same distance from the centre of the recesses of the bearing holders (9) and hence from the longitudinal axis (5) and aligned lying in the same plane.

## Revendications

1. Procédé de montage d'un ensemble d'arbre à cames (1) pré-assemblé pour des machines à combustion interne, ledit ensemble (1) comprenant un arbre à cames (2) doté d'un axe longitudinal (5) et d'au moins une came (3), l'ensemble (1) comprenant, en outre, au moins deux supports de paliers (4), chacun de ces derniers présentant un alésage (12) formant un creux doté d'un logement de palier (9) dans lequel une portion d'arbre de l'arbre à cames (2) est disposée mobile en rotation, chaque support de palier (4) comportant une première surface plane, à savoir une surface de pose (10) permettant de placer et fixer ledit support de palier (4) sur une surface correspondante d'une tête de cylindre ou d'un autre emplacement prédéterminable sur la machine à combustion interne, deux supports de palier (4) au moins comportant une autre surface plane, cette dernière - configurée en tant que surface d'appui (18) - ne se trouvant pas dans le même plan que la surface de pose (10) mais étant orientée et positionnée, pour l'essentiel, parallèlement à l'axe (5') de l'alésage (12) du logement de palier (9), **caractérisé en ce que** les surfaces d'appui (18) des supports de paliers (4) de l'ensemble d'arbre à cames (1) sont alignées par rapport à la surface d'un outil servant de gabarit, avant que lesdits supports de paliers (4) ne soient fixés sur la tête de cylindre.

2. Procédé selon la revendication 1, **caractérisé en ce que** au moins un support de palier (4) est agencé entre deux éléments fonctionnels (3, 14, 15) sur l'arbre à cames (2).

3. Procédé selon la revendication 1 ou 2, **caractérisé en ce que** les surfaces d'appui (18) sont orientées, pour l'essentiel, parallèlement à l'axe longitudinal (5) de l'arbre à cames (2).

4. Procédé selon l'une quelconque des revendications précédentes, **caractérisé en ce que** toutes les surfaces d'appui (18) des supports de palier (4) - lesquels sont au moins deux - sont agencées à la même distance du centre de l'alésage des logements de palier (9), et donc à la même distance de l'axe longitudinal (5), et qu'elles sont orientées dans un même plan.
